# FASCICULE DE BREVET EUROPEEN

(11) **EP 0 448 459 B1**
(45) Date de publication et mention de la délivrance du brevet: **08.06.1994**
(21) Numéro de dépôt: 91400733.1
(22) Date de dépôt: 19.03.1991
(51) Int. Cl.: B29C 39/42, B29C 67/14

(54) **Procédé de production d'objets à trois dimensions par photo-transformation et appareillage de mise en oeuvre d'un tel procédé**
Verfahren und Vorrichtung zur Herstellung dreidimensionaler Gegenstände durch Phototransformation
Method and apparatus for manufacturing three-dimensional articles by phototransformation

(30) Priorité: 20.03.1990 FR 9003521
(43) Date de publication de la demande: 25.09.1991
(73) Titulaire: DASSAULT-AVIATION, F-75008 Paris (FR)
(72) Inventeur: Andre, Jean-Claude, F-54000 Nancy (FR); Schaeffer, Philippe, F-54000 Nancy (FR); Helle, Jean-Louis, F-60270 Gouvieux (FR)
(74) Mandataire: Colas, Jean-Pierre

(56) Documents cités:
- EP-A- 0 250 121
- EP-A- 0 322 257
- FR-A- 2 583 333
- US-A- 4 247 508
- PATENT ABSTRACTS OF JAPAN vol. 12, no. 392 (M-755)(3239) 19 Octobre 1988& JP-A-63 141 725 (FUJITSU ) 14 Juin 1988

## Description

La présente invention est relative à un procédé et un dispositif pour la production d'objets ou modèles de pièces industrielles, par action de la lumière et notamment par photo-transformation d'une matière plastique ou composite.

Il est souhaitable de pouvoir disposer de quelques modèles d'une pièce industriel le, telle, notamment, qu'une pièce mécanique, avant d'en lancer la fabrication en série. Actuellement, pour réaliser des modèles de telles pièces, il est nécessaire de faire tout d'abord effectuer des plans cotés au bureau d'étude à partir de données chiffrées qui définissent la forme de la pièce. Depuis quelques années, la méthode de "Conception Assistée par Ordinateur" (CAO) est utilisée pour définir la forme de cette pièce.

Il est connu de pourvoir à un procédé et à un dispositif de production de modèles de pièces industrielles en utilisant les données chiffrées disponibles dans les mémoires de sortie de l'ordinateur, directement pour réaliser les modèles de pièces sans être obligé de passer par l'intermédiaire de plans ou, de devoir faire intervenir des machines d'usinage à commandes numériques tel les que fraiseuses, tours, etc...

Des procédés et dispositifs proposés pour la réalisation de modèles à l'aide de la CAO reposent sur une polymérisation chimique induite par LASER. Le déplacement asservi d'un ou plusieurs faisceaux laser concentrés en un même point, permet la polymérisation locale d'un monomère polyfonctionnel et, de proche en proche, la réalisation de la pièce.

En particulier le document FR-A-2.567.668 décrit un procédé dont le principe général de réalisation d'une pièce repose sur l'emploi d'un appareil comprenant une cuve qui contient le monomère photopolymérisable liquide au niveau duquel affleure une plate-forme mobile qui descend pas à pas au cours de l'opération. Le faisceau laser UV trace à la surface du liquide des coupes successives de l'objet à produire, grâce à un jeu de miroirs à déflexion électronique, piloté par la base de données du système de CAO. Le logiciel a préalablement subdivisé le modèle virtuel de l'objet en une multitude de tranches de faible épaisseur. Au fur et à mesure de la solidification de chaque tranche, le modèle "sculpté" plonge lentement dans la cuve : avec un laser de 10 mW, ce système permet de créer une pièce de 30 mm de hauteur en 50 minutes, avec une précision de l'ordre de 1/10ème de mm. Le modèle peut être créé en toutes sortes de matériaux (plastiques), en une grande variété de couleurs**,** avec différentes duretés et toute une gamme de résistances à l'abrasion (SCIENCE ET TECHNOLOGIE N° 2, Février 1988/INDUSTRIAL LASER REVIEW, vol. 2, N° 8, Janvier 1988, pages 11-13). Ce type de procédé de fabrication de modèles en trois dimensions, qui utilise le principe de l'absorption monophotonique de la lumière par des photoamorceurs de polymérisation ou de réticulation, présente l'inconvénient de nécessiter la superposition du monomère (ou d'un oligomère ou d'un mélange) sur des parties déjà polymérisées pour obtenir une bonne précision du modèle, il faut superposer un nombre considérable de couches liquides ou pâteuses de monomère, ce qui peut conduire à des temps de réalisation assez longs. De plus le matériau obtenu après irradiation a, en général, une densité supérieure au matériau initial, ce qui peut conduire à des difficultés de mise en oeuvre du procédé et à des instabilités, des déformations ou des contraintes sur tout ou partie du modèle.

Le document EP-A-0250121 décrit un procédé correspondant au même principe général.

Dans le document WO-A-90.06540 non publié au moment du dépôt de la présente demande, et qui est à prendre en considération au titre de l'Article 54(3),on a proposé un procédé comprenant les étapes a) à h) de la revendication 1 et permettant la production de modèles de pièces industrielles par action de la lumière, répondant mieux aux nécessités de la pratique que les procédés et dispositifs visant au même but proposé dans l'art antérieur.

Dans ce procédé, on réalise une pièce par la superposition d'une pluralité de couches d'un matériau solide ou plastique qui est rendu soit soluble, soit insoluble, en présence d'une lumière de longueur d'onde adaptée.

Après irradiation successive de chaque couche, aux endroits convenables, il suffit de placer dans un bain de solvant approprié l'empilement de celles-ci, liées entre elles aux emplacements adéquats.

Cette méthode présente les avantages suivants :
- fabrication "à sec" et sans odeur, d'une pièce ;
- création d'une image latente à trois dimensions permettant en principe l'emploi d'une CAO simplifiée en comparaison de ce qui est nécessaire pour des polymérisations photochimiques de liquides, impliquant le besoin d'ancrage des pièces sur le support.

La méthode présente cependant des limitations :

La première correspond à l'existence d'un retrait lié à la formation de liaisons chimiques, occupant un espace moindre entre les polymères réticulés insolubles.

La seconde est la difficulté d'éliminer le polymère non irradié (si c'est lui qui est soluble) du polymère irradié sans perdre sur la précision des formes. En effet, la notion de solubilité/insolubilité est théorique, en fait il s'agit de différences relatives de solubilité. Pour des pièces où le polymère non irradié est facilement accessible au solvant, lui-même susceptible d'être bien agité, permettant une solubilisation facilitée, le polymère irradié insoluble n'est pratiquement pas attaqué.

En revanche, pour des pièces creuses, où la dissolution ne peut être favorisée par l'agitation, le temps de contact du solvant peut être si long, qu'une partie du polymère irradié peut être dissoute. Il en est bien entendu de même si c'est le polymère non irradié qui est "insoluble".

Ces deux limitations ne permettent l'obtention de formes correspondant exactement à ce qui est prévu que lorsque celles-ci répondent à certaines conditions, et il est difficile et coûteux de modifier les programmes pour tenir compte à l'avance de l'influence des retraits ou des dissolutions non homogènes.

On connaît des matériaux à retrait très faible et même des matériaux qui présentent un gonflement sous irradiation, si bien que, par mélange, on peut obtenir un retrait nul. Cependant, l'emploi de tels mélanges aboutit à remplacer les limitations dans un retrait à des limitations relatives au choix des matériaux.

Le but de la présente invention est de fournir un procédé du type qu'on vient de décrire, et qui échappe à ces limitations, permettant l'obtention d'objets d'une plus grande vérité de formes.

Pour obtenir ce résultat, l'invention fournit un procédé de production d'objets de forme définie comportant les étapes suivantes :
a) fournir un matériau qui, dans un premier état, présente une forte viscosité ou est solide, et qui, lorsqu'il est soumis à un rayonnement de nature, intensité et durée définies, passe dans un deuxième état ou sa solubilité dans un solvant déterminé a une valeur différente de sa valeur quand le matériau est dans ledit premier état, le passage du premier état au second état étant accompagné d'un changement de volume inférieur à une limite fixée à l'avance,
b) préparer une couche mince dudit matériau dans le premier état,
c) balayer ladite première couche mince avec un faisceau dudit rayonnement, suivant un tracé prévu à l'avance et dans des conditions d'intensité et de durée qui provoquent le passage du matériau dans le second état,
d) fournir une seconde couche mince du même matériau et la superposer à la première,
e) balayer ladite seconde couche mince avec un faisceau de même rayonnement, suivant un tracé tel et dans des conditions telles, que ledit passage dans le second état intervient dans la seconde couche et que le volume de la seconde couche intéressé par ledit passage est apte à former au moins un volume continu avec le volume de la première couche qui a été préalablement intéressé par ledit passage dans le second état,
f) répéter les opérations c) à e) jusqu'à ce que les volumes de matériau à plus faible solubilité des couches successives constituent ensemble un volume ayant la forme de l'objet désiré,
g) provoquer l'adhésion de chaque couche sur la précédente au moins dans la région où le matériau d'une des couches a la solubilité la plus faible, cette étape pouvant avoir lieu après une étape d) ou une étape e), ou après l'étape f),
h) mettre l'empilement formé par les couches successives superposées en contact avec ledit solvant de manière à séparer les parties de matière à plus faible solubilité des parties de matière à solubilité plus grande,

ce procédé présentant pour particularité qu'on renforce au préalable au moins une desdites couches minces avec des fibres ou avec une trame.

Les fibres peuvent être disposées en désordre, formant une nappe analogue à un produit non-tissé.

La trame peut être constituée de fibres disposées de façon coordonnée pour constituer les fils d'un grillage ou d'un tissu. On peut aussi concevoir une trame obtenue de façon différente par exemple à partir d'une tôle perforée par voie mécanique ou chimique, ou selon la technique du "métal déployé".

Les fibres, ou la trame, sont, de préférence, incorporées à la couche mince alors que le matériau est dans un état pâteux. Une étape de traitement destiné à augmenter la viscosité du matériau après l'incorporation des fibres ou de la trame peut être effectuée avant la mise en place de la couche mince dans le poste où il doit recevoir le rayonnement.

La présence de fibres ou d'une trame, constituant une armature, s'oppose efficacement au retrait et à toute déformation liée au retrait. En outre, en donnant une plus grande rigidité à l'empilement, elle permet de concevoir des formes plus favorables à l'obtention d'une dissolution régulière, grâce à de meilleurs possibilités de circulation et d'agitation du solvant.

Pour augmenter encore la solidité de l'empilement, on peut prévoir, si on utilise une trame, que celle-ci présente des saillies perpendiculaires à son plan, faisant saillie à l'extérieur de ladite couche mince, et conçues pour coopérer avec la trame d'une couche adjacente en constituant une armature à trois dimensions.

Suivant une autre modalité, qui tend aussi à augmenter la solidité de l'empilement, on peut prévoir qu'on incorpore à ladite couche mince des pièces rigides additionnelles qui font saillie au-delà de la surface de la couche et sont conçues pour coopérer avec les fibres ou la trame de ladite couche mince et avec les fibres ou la trame d'une couche mince adjacente pour réaliser avec ces trames une armature à trois dimensions.

De préférence, afin d'augmenter la rigidité de chaque couche mince, ledit matériau susceptible d'un changement de solubilité contient une charge inerte.

Avantageusement, ledit matériau susceptible d'un changement de solubilité subit une variation de volume inférieure à 2% quand il reçoit ledit rayonnement. Cela permet de réduire les contraintes auxquelles les fibres ou la trame doivent résister, et donc de réduire la proportion de fibres ou l'importance de la trame.

A la fin de l'étape h), des fibres, ou la trame, si elles n'ont pas été dissoutes, font saillie à l'extérieur du volume non dissous. C'est le cas notamment lorsqu'on utilise une trame métallique. Au cas où les fibres, ou la trame, qui font ainsi saillie, se révèlent gênantes, on les enlève par dissolution ou attaque chimique, à l'aide d'une substance n'agissant pas sur le volume non dissous. Par exemple, une trame métallique peut être enlevée par action d'un acide. On a constaté qu'on obtenait ainsi de très bons états de surface.

Malgré les précautions exposées plus haut, des déformations dues aux retraits peuvent apparaître lorsque l'aire de la section balayée par le rayonnement présente des variations importantes d'une couche à une autre de l'objet à réaliser. En effet, une couche qui a subi une irradiation globale importante tend à présenter un retrait d'ensemble plus important qu'une couche peu irradiée. Pour éviter cet inconvénient, on peut prévoir dans ce cas des zones de compensation telles que la surface totale balayée varie peu d'une couche à l'autre.

Si l'objet qu'on désire produire comporte des cavités fermées ou communiquant avec l'extérieur par des passages resserrés, on constitue ledit volume unitaire monobloc avec des passages élargis ou supplémentaires de communication desdites cavités avec l'extérieur, pour permettre une plus libre circulation du solvant, ces passages étant éventuellement comblés ultérieurement. Cette manière d'opérer est grandement facilitée par la grande rigidité du volume monobloc obtenu selon l'invention.

Un appareillage pour la mise en oeuvre d'un procédé selon l'invention peut comprendre :
- des moyens pour former une bande continue dudit matériau, renforcé par la trame,
- des moyens d'acheminement de ladite bande vers un poste de traitement,
- des moyens pour couper la bande en nappes unitaires et pour superposer chaque nappe sur une nappe traitée précédemment, en contact d'adhérence,
- des moyens de traitement comprenant une source de rayonnement capable d'envoyer ledit rayonnement sur un point défini de la nappe, des moyens de détection de la position de la nappe et des moyens pour déplacer ledit point d'impact suivant une loi définie dépendant de ladite position de la nappe,
- des moyens pour acheminer le bloc formé par une superposition de nappes traitées jusqu'à une installation de dissolution du matériau non polymérisé et éventuellement de la fraction restante de la trame.

Selon un autre mode de réalisation, l'appareillage pour la mise en oeuvre d'un procédé selon l'invention comprend :
- des moyens pour former une bande continue dudit matériau, renforcé par la trame,
- des moyens d'acheminement de ladite bande vers un poste de traitement,
- un support rotatif sur lequel ladite bande peut être enroulée,
- des moyens de traitement comprenant une source de rayonnement capable d'envoyer ledit rayonnement sur un point défini de la bande enroulée des aryens de détection de la position du point d'impact du rayonnement sur la bande enroulée et des moyens pour déplacer ledit point d'impact suivant une loi définie dépendant de la situation de ladite bande enroulée.

La description qui va suivre en regard des dessins annexés exposera plus en détail comment l'invention peut être réalisé.

Figure 1 est une vue schématique montrant un appareillage pour la mise en oeuvre d'un procédé de production d'objet à trois dimensions selon l'invention.

Figure 2 est une vue schématique d'un appareillage selon un autre mode de réalisation.

Figures 3A et 3B montrent respectivement des vues d'une armature métallique incorporée au matériau avant et après création d'un relief.

Figures 4A et 4B montrent respectivement des vues d'une armature métallique incorporée au matériau avant et après création d'un relief selon une variante d'exécution.

Figure 5 est une vue schématique montrant un appareillage pour la mise en oeuvre d'une variante d'un procédé de production d'objet à trois dimensions selon l'invention, plus particulièrement montrant la production du matériau.

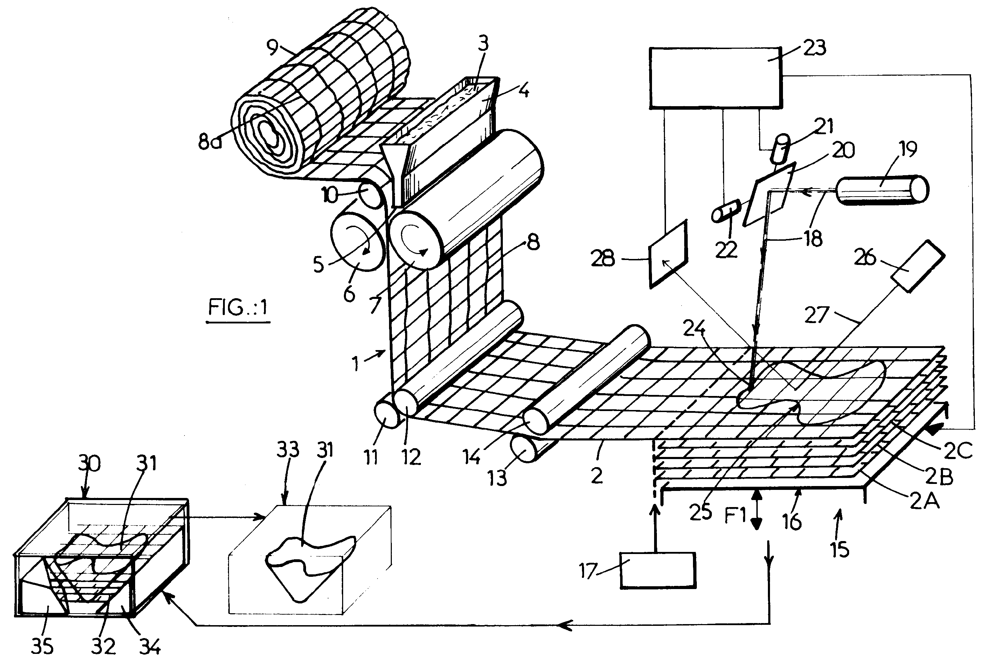

Selon un premier mode de réalisation de l'invention représentée schématiquement à la figure 1, l'appareillage désigné dans son ensemble par la référence 1 comprend des moyens pour former une bande continue 2 à partir d'un matériau composite fluide 3 composé d'une charge, d'un monomère polyfonctionnel de la famille des acryliques ou des époxy, et d'au moins un amorceur photochimique ou thermique.

Ce matériau à forte viscosité est introduit dans un conteneur 4 en forme de trémie longitudinale dont une fente d'alimentation 6 amène le matériau à proximité de deux rouleaux de contrôle d'épaisseur 5 et 7 entraînés en rotation par le déroulement de la bande 2 selon des sens convergents dans une direction d'écoulement du matériau entre lesdits rouleaux, entre lesquels est entraînée simultanément une trame métallique 8 pour être incorporée dans le matériau 3.

La trame métallique 8 se présente sous la forme d'une bobine 9 dont l'extrémité est initialement introduite entre les rouleaux 6 et 7 par un rouleau-guide 10 constituant un premier rouleau de déviation de sens, transformant un déroulement horizontal de la trame en un déroulement vertical de manière à favoriser l'écoulement du matériau 3 dans un sens naturel.

Après formation de la bande 2, celle-ci est déviée à nouveau pour assurer son déroulement horizontal, grâce à deux rouleaux de déviation 11, 12. Ces moyens d'acheminement 10, 11, 12 sont complétés par deux rouleaux moteurs 13 et 14 amenant la bande 2 vers un poste de traitement 15.

Celui-ci comprend un support 16, mobile verticalement et destiné à porter un empilement de nappes unitaires 2A, 2B, 2C superposées, l'étage supérieur de cet empilement étant constitué par l'extrémité de la nappe 2. Un dispositif de coupage 17, par exemple à laser, découpe une nappe unitaire à partir de l'extrémité de la nappe quand celle-ci a été traitée, et un abaissement du support permet l'arrivée de la nouvelle partit d'extrémité de la nappe 2 par dessus la nappe unitaire qui vient d'être traitée. Des moyens de pressage, non représentés, assurent l'adhérence des nappes de l'empilement les unes sur les autres.

Le traitement de la nappe supérieure s'effectue par polymérisation induite par un rayon laser 18 émis par un générateur 19 qui peut être d'un des types suivants :
- lasers UV continus : lasers hélium/cadmium ou argon ionisé, notamment.
- lasers UV impulsionnels : lasers à azote, à eximères ou YAG triplé ou quadruplé, notamment.
- lasers visibles continus ou impulsionnels, à condition que la formulation du film phototransformable comprenne des produits photosensibilisateurs absorbants dans le domaine visible.
- lasers infrarouges continus ou impulsionnels associés à des amorceurs thermiques.

Le rayon laser 18 émis par le générateur 19 est dirigé, par l'intermédiaire d'au moins un miroir orientable 20, vers la surface à traiter selon l'image 21 à obtenir.

Le miroir 20 est équipé de deux moteurs d'orientation 21, 22, reliés à un organe de commande 23, de façon à déplacer le point d'impact 24 du rayon laser 18 sur la couche en cours de traitement.

L'organe de commande 23 fait suivre au point d'impact 24 un trajet défini 25 conformément au programme qu'il a reçu. Ce trajet dépend de la position de la couche à traiter au-dessus du support 16. La position de ce dernier dépend du nombre de nappes unitaires 2A, 2B, 2C qui sont empilées sur lui, de façon que la nappe supérieure, qui est à traiter, soit toujours à peu près à la même hauteur. Toutefois comme l'épaisseur des nappes unitaires peut présenter des variations, il est nécessaire de connaître avec précision la position de la nappe supérieure.

Ceci est obtenu grâce à un dispositif de contrôle constitué par un générateur lumineux auxiliaire 26 fixe, dont le rayonnement est sans effet sur le matériau de la couche. Le rayon 27 émis par le générateur 26 est réfléchi sur la surface de la couche et reçu par un capteur 28 comportant un écran récepteur. La position exacte du point où le rayon lumineux rencontre le capteur 25 indique la situation de la surface supérieure de l'empilement, qui doit être traitée. Le capteur 28 est relié à l'organe de commande 23 qui reçoit également des signaux représentatifs de la position du support 16, dont la face supérieure, qui porte la base de l'empilement, constitue une surface de référence. L'organe de commande 23 peut donc calculer avec précision la position de la face supérieure de l'empilement par rapport à la base, et sélectionner en conséquence le sous-programme de tracé à la courbe 25 qui correspond à cette position ou à la position la plus proche.

Le bloc constitué par un empilement complet de nappes unitaires 2A, 2B, 2C ... contenant l'image latente de l'objet à obtenir est évacué du poste de traitement 15 par des moyens non représentés, qui peuvent être manuels, et transféré dans une cuve de dissolution 30, remplie d'un solvant approprié à dissoudre la fraction soluble de la matière des nappes. Cette cuve de dissolution est représentée à la figure 1 à une échelle réduite. On extrait de la cuve 30 un objet solide 31, qui a la forme désirée, mais dont la surface extérieure porte les fils de trame 32 non dissous. L'objet 31 est ensuite porté dans une cuve d'attaque 33 dans laquelle les fils de trame 32 sont détruits.

Dans l'exemple décrit, l'objet 31 est de forme grossièrement conique, et on a crée des masses de compensation 34, 35 de forme très grossièrement complémentaires, destinés à éviter une déformation sous l'effet d'un retrait. Dans le bac de dissolution 30, ces masses de compensation peuvent rester liées à l'objet 31 par la trame 32 restante, et en être séparées dans le bac d'attaque 33. On peut également couper sommairement les fils de trame 32 avant le transfert dans le bac 33 afin d'éviter le risque d'endommager l'objet pendant ce transfert.

Les opérations définies ci-dessus conduisent donc à la réalisation d'un objet à trois dimensions solides dont les dimensions finales correspondent aux valeurs de consigne provenant du système de conception assistée par ordinateur (CAO).

Ce procédé permet, comme cela a été expliqué précédemment, de réaliser une image latente permettant l'emploi d'une CAO simplifiée.

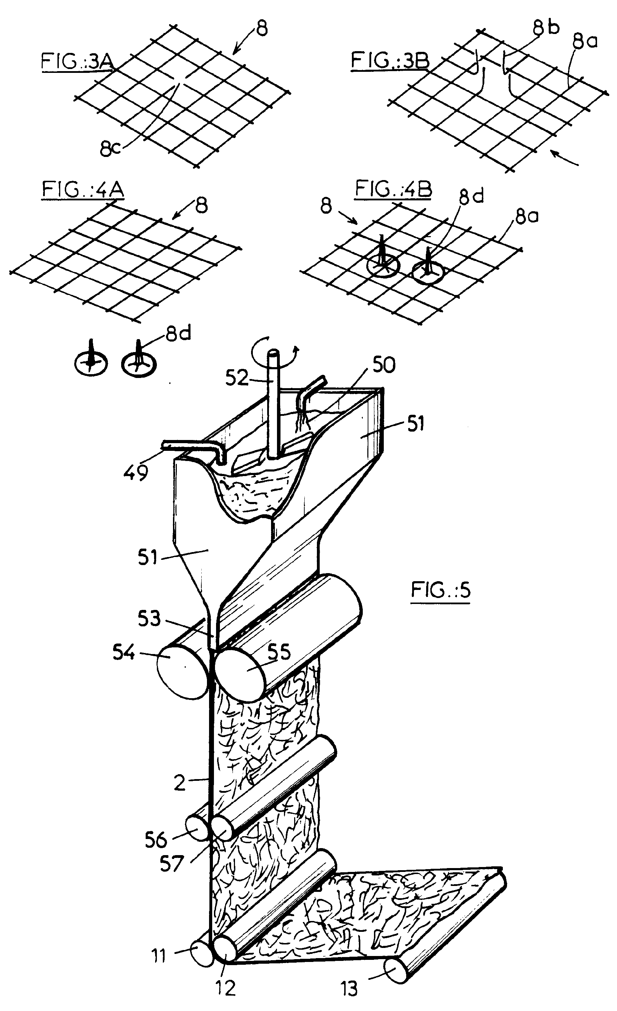

Pour permettre d'armer à trois dimensions la pièce ainsi réalisée par polymérisation, il est possible d'utiliser une trame métallique 8 dans laquelle des reliefs verticaux 8b ont été réalisés, par coupure locale 8c de celle-ci et création d'un relief constitué par un fil métallique (figure 3). D'autres systèmes du même type peuvent être réalisés pour permettre une meilleure relation dans l'armature entre les couches, comme par exemple à la figure 4 où des pièces métalliques 8d additionnelles traversent ladite trame 8.

Dans cet exemple, la trame métallique peut avantageusement être constituée par des métaux facilement attaquables par des produits comme des acides ou des bases, il peut s'agir de fer, de zinc, d'aluminium ou d'alliages.

La résolution verticale du procédé est directement liée à l'épaisseur de la trame métallique.

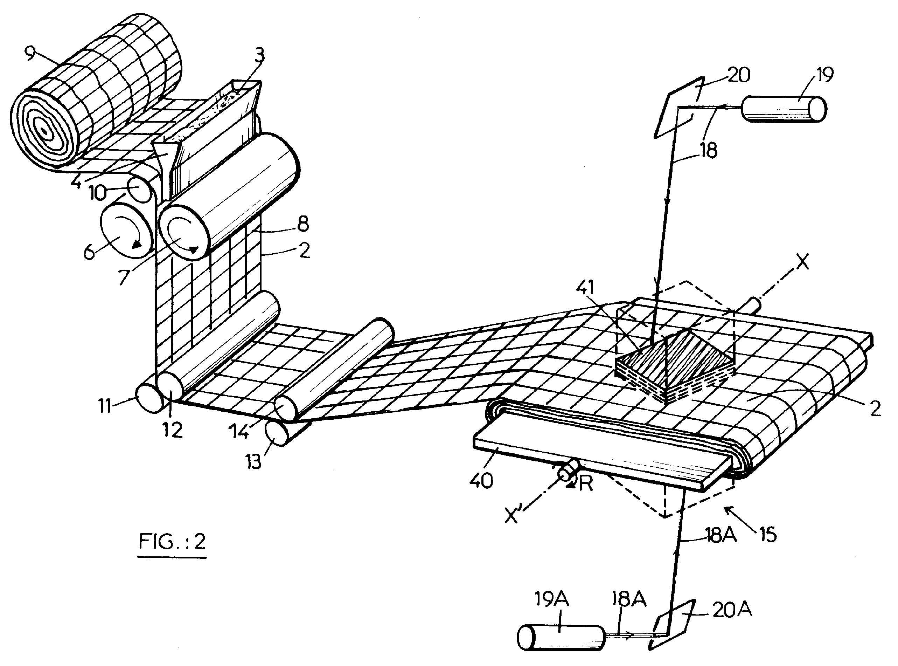

Selon un autre mode de réalisaticn de l'appareillage représenté à la figure 2, celui-ci diffère essentiellement du précédent en ce que les moyens mobiles de changement de position des nappes unitaires sont constitués par un support plan 40 rotatif autour d'un axe XX′, entraîné en rotation suivant un sens R par des moyens moteurs non représentés et permettant l'enroulement de la bande 2 entre chaque traitement de nappes unitaires. On peut réaliser simultanément deux objets grâce à un doublement des sources de rayonnement 19, 19A capables d'envoyer un rayon laser 18, 18A par l'intermédiaire de miroirs orientables respectivement 20, 20A, vers les nappes unitaires à traiter selon des images 41 prédéfinies.

Dans cet exemple de réalisation, les rouleaux 13, 14 faisant partie des moyens d'acheminement ne sont plus moteurs comme dans le précédent exemple mais uniquement tendeurs car l'entraînement moteur est effectué par la rotation même du support 40. On obtient ainsi, sans moyens auxiliaires, une bonne application des nappes unitaires l'une sur l'autre.

On peut bien entendu imaginer un support à trois faces, à quatre faces etc... plutôt que deux parallèles, permettant de réaliser davantage d'objets simultanément. Bien entendu, les sources de rayonnement seront multipliées de la même manière.

Outre l'intérêt d'un tel dispositif, pour la réalisation d'au moins deux objets simultanément, celui-ci permet par la pression exercée sur la trame métallique 8 rigide et résistante, le maintien de la planéité par mise sous tension de la surface traitée.

Selon un autre mode de réalisation (non représenté) d'un matériau composite conforme à l'invention, la trame peut être constituée d'un tissu réalisé à l'aide de fibres naturelles ou artificielles susceptibles d'être dissoutes ou détruites par des procédés chimiques ou thermiques.

Enfin, selon un dernier mode de réalisation conforme à l'invention (figure 5), la pâte permettant la réalisation d'une bande est réalisée à partir d'un matériau intissé constitué soit de fils métalliques, de fibres minérales ou organiques naturel les ou artificielles, imbibées d'un oligomère et de son amorceur. Dans ce procédé, qui requiert des fibres courtes, la simple dissolution de la fraction soluble permet d'obtenir l'objet désiré, à moins qu'un état de surface fin soit désiré.

Ce mode de réalisation diffère essentiellement des précédents par le fait que la matière première fluide 49, à base d'oligomère, et les fibres 50 sont introduites simultanément dans une trémie 51 dans laquelle est actionné en rotation un agitateur 52 pour l'obtention d'une pâte composite homogène des fibres 49. Le matériau ainsi obtenu s'échappe par une filière longitudinale 53 constituant la partie inférieure de ladite trémie, à proximité de deux rouleaux de contrôle d'épaisseur et de mise en forme 54, 55 du matériau composite. Ce dernier transformé ainsi en bande 2, passe entre deux rouleaux intermédiaires essoreurs 56, 57 ayant pour rôle d'éliminer le fluide en excès et d'obtenir l'épaisseur définitive de la bande 2 à traiter. La bande 2 ainsi détenue est dirigée vers un poste de traitement 15 selon l'un quelconque des moyens d'acheminement décrits précédemment.

## Revendications

1. Procédé de production d'objets de forme définie comportant les étapes suivantes :
a) fournir un matériau qui, dans un premier état, présente une forte viscosité ou est solide, et qui, lorsqu'il est soumis à un rayonnement de nature, intensité et durée définies, passe dans un deuxième état ou sa solubilité dans un solvant déterminé a une valeur différente de sa valeur quand le matériau est dans ledit premier état, le passage du premier état au second état étant accompagné d'un changement de volume inférieur à une limite fixée à l'avance,
b) préparer une couche mince (2) dudit matériau dans le premier état,
c) balayer ladite première couche mince avec un faisceau (18, 18A) dudit rayonnement, suivant un tracé (24, 41) prévu à l'avance et dans les conditions qui provoquent le passage du matériau dans le second état,
d) fournir une seconde couche mince du même matériau dans le premier état et la superposer à la première,
e) balayer ladite seconde couche mince avec un faisceau de même rayonnement, suivant un tracé tel et dans des conditions telles, que ledit passage dans le second état intervient dans la seconde couche et que le volume de la seconde couche intéressé par ledit passage est apte à former au moins un volume continu avec le volume de la première couche qui a été préalablement intéressé par ledit passage dans le second état,
f) répéter les opérations d) et e) jusqu'à ce que les volumes de matériau à plus faible solubilité des couches successives constituent ensemble un volume ayant la forme de l'objet désiré,
g) provoquer l'adhésion de chaque couche sur la précédente au moins dans la région où le matériau d'une des couches a la solubilité la plus faible, cette étape pouvant avoir lieu après une étape d) ou une étape e), ou après l'étape f),
h) mettre l'empilement formé par les couches successives superposées en contact avec ledit solvant de manière à séparer les parties de matière à plus faible solubilité des parties de matière à solubilité plus grande,
procédé dans lequel on renforce au préalable au moins certaine desdites couches minces avec des fibres (50) ou avec une trame (8).

2. Procédé selon la revendication 1, caractérisé en ce que, pour renforcer ladite couche mince, on lui incorpore, alors que le matériau est dans un état pâteux, des fibres courtes (50) formant une nappe analogue à un produit non-tissé.

3. Procédé selon la revendication 1, caractérisé en ce que, pour renforcer ladite couche mince, on lui incorpore une trame (8) alors que le matériau est dans un état pâteux.

4. Procédé selon la revendication 3 et comprenant l'emploi d'une trame, caractérisé en ce que la trame présente des saillies (8b) perpendiculaires à son plan, faisant saillie à l'extérieur de ladite couche mince, et conçues pour coopérer avec la trame (8) d'une couche adjacente en constituant une armature à trois dimensions.

5. Procédé selon la revendication 3, caractérisé en ce qu'on incorpore à ladite couche mince des pièces rigides additionnelles (8d) qui font saillie au-delà de la surface de la couche et sont conçus pour coopérer avec les fibres ou la trame de ladite couche mince et avec les fibres ou la trame d'une couche mince adjacente pour réaliser avec ces trames une armature à trois dimensions.

6. Procédé selon l'une des revendications 1 à 5, caractérisé en ce que ledit matériau susceptible d'un changement de solubilité contient une charge inerte.

7. Procédé selon l'une des revendications 1 à 6, caractérisé en ce que ledit matériau subit une variation de volume inférieure à 2% quand il reçoit ledit rayonnement.

8. Procédé selon l'une des revendications 1 à 7, caractérisé en ce qu'on enlève les fibres ou la trame qui, après l'étape h), font saillie à l'extérieur du volume non dissous, par dissolution ou attaque chimique à l'aide d'une substance n'agissant pas sur ledit volume non dissous.

9. Procédé selon les revendications 1 à 8, caractérisé en ce que, au cas où, d'une couche à une autre de l'objet à réaliser, l'aire de la section à balayer par ledit rayonnement présente des variations importantes, on prévoit des zones de compensation (34, 35) telles que la surface totale balayée varie peu d'une couche à l'autre.

10. Procédé selon l'une des revendications 1 à 9, caractérisé en ce que, si l'objet qu'on désire produire comporte des cavités fermées ou communiquant avec l'extérieur par des passages resserrés, on constitue ledit volume unitaire monobloc avec des passages élargis ou supplémentaires de communication desdites cavités avec l'extérieur, pour permettre une plus libre circulation du solvant, ces passages étant éventuellement comblés ultérieurement.

11. Appareillage pour la mise en oeuvre du procédé selon les revendications précédentes, comprenant :
- des moyens (4, 5, 6, 7) pour former une bande continue (2) dudit matériau, renforcé par la trame,
- des moyens d'acheminement (10, 11, 12, 13, 14) de ladite bande (2) vers un poste de traitement (15),
- des moyens (17) pour couper la bande (2) en nappes unitaires (16) et pour superposer chaque nappe (16) sur une nappe traitée précédemment, en contact d'adhérence,
- des moyens de traitement comprenant une source de rayonnement (19) capable d'envoyer ledit rayonnement (18) sur un point défini (23) de la nappe, des moyens de détection (22) de la position de la nappe (16) et des moyens (20) pour déplacer ledit point (23) suivant une loi définie dépendant de ladite position de la nappe (16),
- des moyens pour acheminer le bloc formé par une superposition de nappes (6) traitées jusqu'à une installation de dissolution de la partie à forte solubilité du matériau (3) et éventuellement de la fraction restante de la trame (8).

12. Appareillage pour la mise en oeuvre du procédé selon les revendications 1 à 10, comprenant :
- des moyens (4, 5, 6, 7) pour former une bande continue dudit matériau, renforcé par la trame,
- des moyens d'acheminement (10, 11, 12, 13, 14) de ladite bande 2 vers un poste de traitement (15),
- un support rotatif (25) sur lequel ladite bande (2) peut être enroulée,
- des moyens de traitement (15) comprenant une source de rayonnement (19, 19A) capable d'envoyer ledit rayonnement sur un point défini de la bande enroulée (2) des moyens de détection de la position du point d'impact du rayonnement sur la bande enroulée et des moyens (20, 20A) pour déplacer ledit point d'impact suivant une loi définie dépendant de la situation de ladite bande enroulée (2),
- des moyens pour séparer du support rotatif le bloc formé par les nappes enroulées et pour l'acheminer jusqu'à une installation de dissolution de la partie à faible solubilité du matériau (3).

## Patentansprüche

1. Verfahren zur Herstellung von Objekten bestimmter Form, welches die folgenden Schritte aufweist:
a) Beibringen eines Materials, welches, in einem ersten Zustand eine hohe Viskosität aufweist oder fest ist, und welches, wenn es einer Strahlung von definierter Art, Intensität und Dauer unterworfen wird, in einen zweiten Zustand übergeht, in dem seine Löslichkeit in einem Lösungsmittel auf einen verschiedenen Wert von dem, wenn sich das Material im ersten Zustand befindet, festgelegt ist, wobei der Übergang vom ersten Zustand zum zweiten Zustand von einer Änderung des Volumens unter eine im voraus festgelegten Grenze begleitet ist,
b) Vorbereiten einer dünnen Schicht (2) des Materials im ersten Zustand,
c) Überstreichen der ersten dünnen Schicht mit einem Büschel (18, 18A) der Strahlung, einer im voraus bestimmten Linie (24, 41) folgend und unter den Bedingungen, die den Übergang des Materials in den zweiten Zustand hervorrufen,
d) Beibringen einer zweiten dünnen Schicht desselben Materials wie die erste in dem ersten Zustand und ihr Schichten auf die erste,
e) Überstreichen der zweiten dünnen Schicht mit einem Büschel derselben Strahlung, folgend einer derartigen Linie und unter derartigen Bedingungen, daß der Übergang in den zweiten Zustand in der zweiten Schicht eintritt und daß das vom Übergang betroffene Volumen der zweiten Schicht geeignet ist, zumindest ein zusammenhängendes Volumen mit dem Volumen der ersten Schicht zu bilden, das vorher vom Übergang in den zweiten Zustand betroffen worden ist,
f) Wiederholen der Operationen d) und e), bis das die Volumina von Material geringerer Löslichkeit der aufeinanderfolgenden Schichten gemeinsam ein Volumen bilden, welches die Form des gewünschten Gegenstandes hat,
g) Bewirken der Haftung jeder Schicht auf der vorhergehenden zumindest in dem Bereich, wo das Material einer der Schichten die geringere Löslichkeit hat, wobei dieser Schritt nach einem Schritt d) oder einem Schritt e), oder nach Schritt f) stattfinden kann,
h) Bringen des Stapels gebildet aus den aufeinanderfolgend übereinander gelagerten Schichten in Kontakt mit dem Lösungsmittel, um die Teile des Materials geringerer Löslichkeit von den Teilen des Materials höherer Löslichkeit zu trennen,
ein Verfahren in dem man zuvor zumindest bestimmte der dünnen Schichten mit Fasern (50) oder mit einem rasterartigen Material (8) verstärkt.

2. Verfahren gemäß Anspruch 1, dadurch gekennzeichnet, daß man, um die dünne Schicht zu verstärken, in diese, während das Material in einem pastenartigen Zustand ist, kurze Fasern (50) einbaut, die ein Vlies analog zu einem Nonwoven-Erzeugnis bilden.

3. Verfahren gemäß Anspruch 1, dadurch gekennzeichnet, daß man, um die dünne Schicht zu verstärken, in sie ein rasterartiges Material (8) einbaut, während das Material in einem pastenartigen Zustand ist.

4. Verfahren gemäß Anspruch 3 und den Gebrauch eines rasterartigen Materials umfassend, dadurch gekennzeichnet, daß das rasterartige Material Vorsprünge (8b) senkrecht zu seiner Ebene aufweist, die zum Äußeren der dünnen Schicht hin vorspringen, und vorgesehen sind, um mit dem rasterartigen Material einer benachbarten Schicht zusammenzuwirken, um mit dem rasterartigen Material eine dreidimensionale Bewehrung zu bilden.

5. Verfahren gemäß Anspruch 3, dadurch gekennzeichnet, daß man in die dünne Schicht zusätzliche starre Teile (8d) einbaut, die über die Oberfläche der Schicht hinaus vorspringen und vorgesehen sind, um mit den Fasern oder mit dem rasterartigen Material dieser Schicht zusammenzuarbeiten und mit den Fasern oder dem rasterartigen Material einer benachbarten Schicht, um mit diesen rasterartigen Materialien eine dreidimensionale Bewehrung zu bilden.

6. Verfahren gemäß einem der Ansprüche 1 bis 5, dadurch gekennzeichnet, daß das zu einer Änderung der Löslichkeit fähige Material einen inaktiven Füllstoff enthält.

7. Verfahren gemäß einem der Ansprüche 1 bis 6, dadurch gekennzeichnet, daß das Material einer Veränderung des Volumens unter 2 % unterliegt, wenn es die Strahlung empfängt.

8. Verfahren gemäß einem der Ansprüche 1 bis 7, dadurch gekennzeichnet, daß man die Fasern oder das rasterartige Material wegnimmt, welche nach Schritt (h)zum Äußeren des nicht gelösten Volumens vorspringen, durch Lösung oder chemischen Angriff mit Hilfe einer Substanz, die nicht auf das nicht gelöste Volumen einwirkt.

9. Verfahren gemäß einem der Ansprüche 1 bis 8, dadurch gekennzeichnet, daß man in dem Fall, in dem von einer Schicht zur anderen des zu verwirklichenden Gegenstandes die Fläche des von der Strahlung zu überstreichenden Schnittes bedeutende Veränderungen aufweist, Kompensationszonen (34, 35) vorsieht, so daß sich die insgesamt überstrichene Oberfläche von einer Schicht zur anderen wenig ändert.

10. Verfahren gemäß einem der Ansprüche 1 bis 9, dadurch gekennzeichnet, daß man, wenn der Gegenstand den man herzustellen wünscht geschlossene oder mit dem Äußeren durch zusammenschnürende Durchgänge verbundene Hohlräume aufweist, das einheitliche Volumen aus einem Stück mit verbreiterten oder zusätzlichen Durchgängen der Verbindung der Hohlräume mit dem Äußeren bildet, um eine freiere Zirkulation des Lösungsmittels zu ermöglichen, wobei diese Durchgänge gegebenenfalls später ausgefüllt werden.

11. Vorrichtung zum Durchführen des Verfahrens gemäß einem der vorstehenden Ansprüche, umfassend:
- Mittel (4, 5, 6, 7) zum Formen eines fortlaufenden Bandes (2) des Materials, verstärkt durch das rasterartige Material,
- Mittel (10, 11, 12, 13, 14) zum Führen des Bandes (2) zu einer Bearbeitungsstelle (15),
- Mittel (17) zum Schneiden des Bandes in einheitliche Bandstücke (16) und zum Schichten jedes Bandstückes (16) auf ein zuvor behandeltes Bandstück in Haftkontakt,
- wobei die Mittel zum Behandeln eine Strahlungsquelle (19) aufweisen, die in der Lage ist, die Strahlung (18) zu einem bestimmten Punkt (23) des Bandstückes zu schicken, Mittel zur Erfassung der Position des Bandstückes (16) und Mittel (20) zum Verschieben des Punktes (23) einem bestimmten Gesetz folgend, welches von der Position des Bandstückes (16) abhängt, aufweisen
- Mittel zum Führen des durch das Schichten von behandelten Bandstücken (16) übereinander geformten Blockes bis zu einer Einrichtung zum Auflösen des Teils starker Löslichkeit des Materials (3) und gegebenenfalls des verbleibenden Teils des rasterartigen Materials (8).

12. Vorrichtung zum Durchführen des Verfahrens gemäß einem der Ansprüche 1 bis 10, umfassend:
- Mittel (4, 5, 6, 7) zum Bilden eines fortlaufenden Bandes des Materials, verstärkt durch das rasterartige Material,
- Mittel (10, 11, 12, 13, 14) zum Führen des Bandes (2) zu einer Behandlungsstelle (15),
- einem drehbaren Träger (25), auf dem das Band (2) aufrollbar ist,
- wobei die Mittel (15) zur Behandlung, eine Strahlungsquelle (19, 19A), die in der Lage ist, die Strahlung auf einen definierten Punkt des aufgewickelten Bandes (2) zu richten, Mittel zur Erfassung der Position des Auftreffpunktes der Strahlung auf das aufgewickelte Band und Mittel (20, 20A) zum Verschieben des Auftreffpunktes einem bestimmten Gesetz abhängig von der Lage des aufgewickelten Bandes (2) folgend, aufweisen,
- Mittel zum Trennen des von den aufgewickelten Bandstücken gebildeten Blockes vom drehbaren Träger und um ihn bis zu einer Einrichtung zum Auflösen des Teils geringer Löslichkeit des Materials (3) zu führen.

## Claims

1. Process for the production of objects of defined shape, comprising the following steps :
a) providing a material which, in a first state, has a high viscosity or is solid and which, when subjected to a radiation of defined nature, intensity and direction, changes into a second state where its solubility in a specified solvent has a value which is different from the value that it has when the material is the said first state, the change from the first state into the second state being accompanied by a change of volume less than a predetermined limit,
b) preparing a thin layer of the said material in the first state,
c) scanning said first thin layer with a beam (18, 18A) of said radiation, according to a pattern (24, 41) specified in advance and under the conditions which are capable of causing the change of the material into the second state,
d) providing a second thin layer of the same material in the first state and superposing it on the first,
e) scanning said second thin layer with a beam of the same radiation, according to a pattern such that and under conditions such that said change into the second state occurs in the second layer and that volume of the second layer which is affected by said change is capable of forming at least one volume continuous with that volume of the first layer which has been previously affected by the said change into the second state,
f) repeating the operations d) and e) until the volumes of material having lower solubility of the successive layers constitute together an integral unitary volume having the shape of the desired object,
g) causing the adhesion of each layer on the previous layer, at least in the region where the material of one of two the layers has the lowest solubility, in such a manner as to constitute a continuous volume of material having lower solubility, it being possible for this step e) to take place after a step d), or a step e), or after the step f),
h) placing the stack formed by the superposed successive layers in contact with said solvent in such a manner as to separate the parts of material having lower solubility from the parts of material having higher solubility,
characterised in that at least some of the said thin layers are previously reinforced with fibres (50) or with a screen (8).

2. Process according to claim 1, characterised in that, in order to reinforce said thin layer, there are incorporated therein, while the material is in a pasty condition, short fibres (50) forming a sheet similar to a non-woven product.

3. Process according to claim 1, characterised in that, in order to reinforce said the thin layer, a screen (8) is incorporated therein while the material is in a pasty condition.

4. Process according to claim 3, and copprising the use of a screen, characterised in that the screen exhibits projections (8b) perpendicular to its plane, projecting outside said the thin layer, and designed to cooperate with the screen (8) of an adjacent layer, constituting a three-dimensional reinforcement.

5. Process according to claim 3, characterized in that there are incorporated in said thin layer additional rigid parts (8d) which form projections beyond the surface of the layer and are designed to cooperate with the fibres or the screen of said thin layer and with the fibres or the screen of an adjacent thin layer in order to construct, together with these screens, a three-dimensional reinforcement.

6. Process according to one of claimps 1 to 5, characterised in that the said material capable of a change of solubility contains an inert filler.

7. Process according to one of claims 1 to 6, characterized in that the said material undergoes a volume variation of less than 2% when it receives the said radiation.

8. Process according to one of claims 1 to 7, characterised in that the fibres or the screen which, after the step h), project ouside the non-dissolved volume are removed by dissolving or chemical attack by means of a substance which does not act on the said non-dissolved volume.

9. Process according to claims 1 to 8, characterised in that, in the case where, from one layer to another of the object to be constructed, the area of the cross section to be scanned by the said radiation exhibits large variations, there are provided compensation zones (34, 35) such that the total scanned surface area shows no more than slight variation from one layer to the other.

10. Process according to one of claims 1 to 9, characterised in that, if the object which it is desired to produce includes cavities which are closed or wich communicate with the exterior via confined passages, said integral unitary volume is formed with broadened or supplementary passages for the communication of said cavities with the exterior, in order to permit a less restricted circulation of the solvent, these passages possibly being filled subsequently.

11. Apparatus for carrying out the process according to the preceding claims, characterised in that it comprises :
- means (4, 5, 6, 7) for forming a continuous strip (2) of the said material, reinforced by the screen,
- means (10, 11, 12, 13, 14) for directing the said strip (2) towards a treatment station (15),
- means (17) for cutting the strip (2) into unitary sheets (16) and for superposing each sheet (16) on a previously treated sheet, in adhesion contact,
- treatment means comprising a radiation source (19) capable of passing the said radiation (18) to a defined point (23) of the sheet, means (22) for detecting the position of the sheet (16) and means (20) for displacing said point (23) in accordance with a defined law as a function of said position of the sheet (16),
- means for directing the block formed by a superposition of treated sheets (6) to an installation for dissolving the high-solubility part of the material (3) and possibly the remaining fraction of the screen (8).

12. Apparatus for carrying out the process according to claims 1 to 10, characterised in that it comprises :
- means (4, 5, 6, 7) for forming a continuous strip of the said material, reinforced by the screen,
- means (10, 11, 12, 13, 14) for directing the said strip (2) towards a treatment station (15),
- a rotatable support (25) on wich the said strip (2) may be wound,
- treatment means (15) comprising a radiation source (19, 19A) capable of passing the said radiation to a defined point of the wound strip (2), means for detecting the position of the impact point of the radiation on the wound strip and means (20, 20A) for displacing the said impact point in accordance with a defined law as a function of the location of the said wound strip (2),
- means for separating from the rotatable support the block formed by the wound sheets and for directing it to an installation for dissolving the low-solubility part of the material (3).
